**Europäisches Patentamt**

**European Patent Office**

**Office européen des brevets**

(19)

(11) Veröffentlichungsnummer: **0 029 912**
**B1**

(12) # EUROPÄISCHE PATENTSCHRIFT

(45) Veröffentlichungstag der Patentschrift:
**02.05.85**

(51) Int. Cl.⁴: **B 29 C 41/00**

(21) Anmeldenummer: **80106465.0**

(22) Anmeldetag: **23.10.80**

(54) **Formschale, insbes. Laminierformschale.**

(30) Priorität: **04.12.79 DE 2948690**

(43) Veröffentlichungstag der Anmeldung:
**10.06.81 Patentblatt 81/23**

(45) Bekanntmachung des Hinweises auf die Patenterteilung:
**02.05.85 Patentblatt 85/18**

(84) Benannte Vertragsstaaten:
**FR GB NL SE**

(56) Entgegenhaltungen:
**FR - A - 2 076 776**
**US - A - 2 895 224**

**KUNSTSTOFF-RUNDSCHAU, Band 11, Nr. 12, November 1965, Seiten 628-633, Hamburg, DE, K.W. Sender: "Die Anwendung von Epoxydharzen im Werkzeug-, Formen- und Modellbau"**

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Hahn, Michael, Dipl.-Ing., Bahnhof Strasse 15 b, D-8012 Ottobrunn (DE)**
Erfinder: **Wackerle, Peter, Dipl.-Ing., Oderweg 6, D-8012 Ottobrunn (DE)**
Erfinder: **Eschenfelder, Peter, Dorfstrasse 3, D-8011 Faistenhaar (DE)**
Erfinder: **Schulz, Ralf-Thilo, Dipl.-Ing., Ödenstockacher Strasse 3, D-8011 Putzbrunn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Formschale nach dem Oberbegriff des Patentanspruchs 1.

Zur Herstellung von räumlich gekrümmten, d.h. an sich nichtabwickelbaren Bauteilen sind zumeist profilgefräste Metall- oder mit Hilfe einer Formschablone oder eines Innenkerns hergestellte Kunststoff-Formen bekannt, deren Herstellungsaufwand vor allem bei grösseren Bauteilabmessungen sehr gross ist und in denen Faserverbundbauteile unter Wärmeeinwirkung nicht oder nur sehr schwierig verzugsfrei ausgehärtet werden können. So besteht eine bekannte Formschale dieser Art (FR-A-2 076 776) aus mehreren, entsprechend der Bauteilkontur gekrümmten Formteilen, die in herstellungsmässig aufwendiger Weise vorgefertigt und zusammengebaut werden müssen.

Die der Erfindung zugrunde liegende Aufgabe besteht darin, eine Formschale nach dem Oberbegriff des Patentanspruchs 1 zu schaffen, bei der die Nachteile der bekannten Kunststoff- und gefrästen Metallformen beseitigt sind und die mit geringem Aufwand herstellbar und für die Fertigung auch sehr langer Bauteile mit räumlich gekrümmter Oberfläche geeignet ist.

Diese Aufgabe wird erfindungsgemäss durch die im Anspruch 1 gekennzeichnete Formschale gelöst.

Die erfindungsgemässe Formschale hat den Vorteil, dass sie aus einer einstückigen, plattenförmigen Formwand durch blosses Abbiegen längs gerader Biegelinien mit genau vorgegebenen Winkeln hergestellt wird, wobei ihre Innenfläche abwickelbar ist und aufgrund der angegebenen Tangentenbedingung mit hoher Genauigkeit auch an die stärker gekrümmten Flächenbereiche des herzustellenden Bauteils angenähert werden kann. Da sie einstückig ausgebildet ist, ist sie verschleissfest und vakuumdicht und besitzt wegen ihrer polygonalen Querschnittskonfiguration und selbst ohne die zusätzliche Abstützung eine hohe Biegesteifigkeit und zugleich eine gewisse Torsionselastizität, nimmt also freitragend nahezu selbsttätig die Sollkontur ein, so dass eine Entkoppelung zwischen Formschale und Abstützung erreicht wird und durch die letztere nur noch eine gegen Eigendurchbiegung und Verwindungen sichere Positionierung der Formschale gewährleistet werden muss.

In weiterer vorteilhafter Ausgestaltung der Erfindung ist die Formwand gemäss Anspruch 2 zweckmässigerweise ein Blechteil, und in besonders bevorzugter Weise ist gemäss Anspruch 3 eine spezielle Befestigung zwischen Formschale und Abstützung vorgesehen, durch die sichergestellt wird, dass die Formschale auch unter den Temperaturschwankungen beim Aushärten von Faserverbundwerkstoffen thermisch von der Abstützung entkoppelt bleibt und somit durch unterschiedliche Wärmeausdehnungen bedingte Formflächenverzerrungen unterbunden werden. Gemäss Anspruch 4 sind die Befestigungen der Abstützung vorzugsweise an eine elastische Verwindung der Formschale anpassbar, was bei Bauteilen mit einer Verwindung in Bauteillängsrichtung den Vorteil hat, dass diese Verwindung bei der Herstellung der Formschale noch nicht berücksichtigt zu werden braucht. Auf diese Weise können äusserst einfach beispielsweise Rotorblätter mit der erforderlichen Verwindung hergestellt werden, wobei diese jederzeit nach Grösse und Drehrichtung geändert werden kann, so dass mit ein und derselben Formschale Tragflügel unterschiedlicher Profilverwindung angefertigt werden können.

Eine oder mehrere Formschalen ergeben mit den zugehörigen Abstützungen eine Laminierform, die die Herstellung auch sehr langer Faserverbundteile in einem Schuss mit Heisshärtung ermöglicht. Die Beheizung der Form kann beispielsweise mittels Heissluft erfolgen. Vor allem bei sehr langen Bauteilen werden gemäss Anspruch 5 vorzugsweise mehrere Formschalen in Bauteillängsrichtung aneinandergrenzend auf der Abstützung fixiert, so dass die Form, wenn sie vorübergehend nicht gebraucht wird, in einfacher Weise zerlegt und gelagert werden kann und einzelne Formschalen erforderlichenfalls bei anderen Laminierformen Verwendung finden können.

Anhand der Zeichnungen wird die Erfindung beispielsweise näher erläutert. Es zeigen:

Fig. 1 perspektivisch einen Abschnitt der herzustellenden Bauteils in Form eines Flügels mit geraden Biegelinien,

Fig. 2 die Abwicklung des oberen Teils des Flügelabschnittes von Fig. 1 mit den Biegelinien,

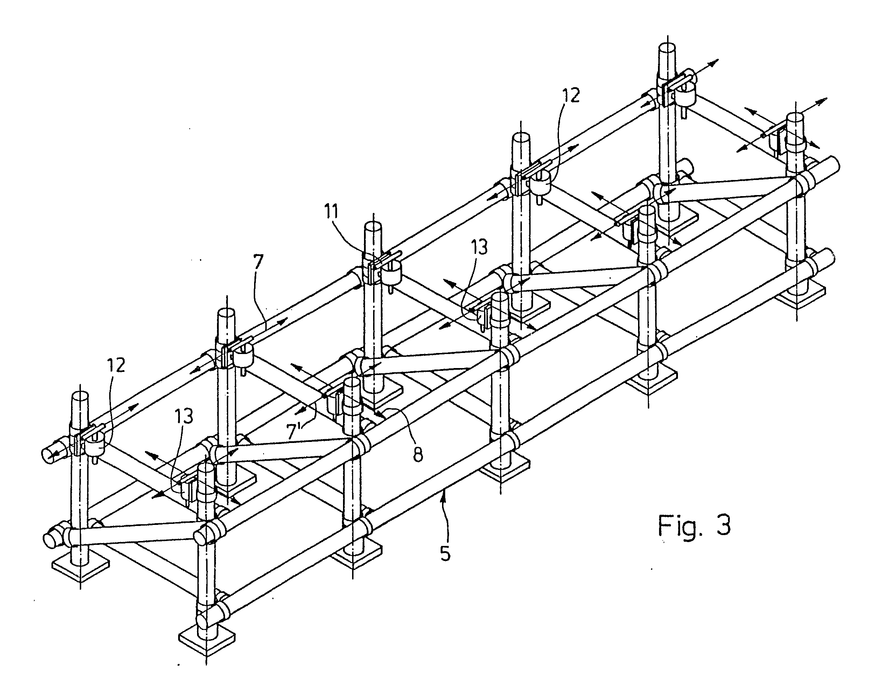

Fig. 3 perspektivisch eine Ausführungsform einer Abstützung für die längs der Biegelinien abgebogene Formwand und für seine unter Aufbringung einer Verwindung vorgesehenen, thermisch entkoppelten Fixierung, und

Fig. 4 die Abstützung von Fig. 3 mit der darauf fixierten, abgebogenen Formwand.

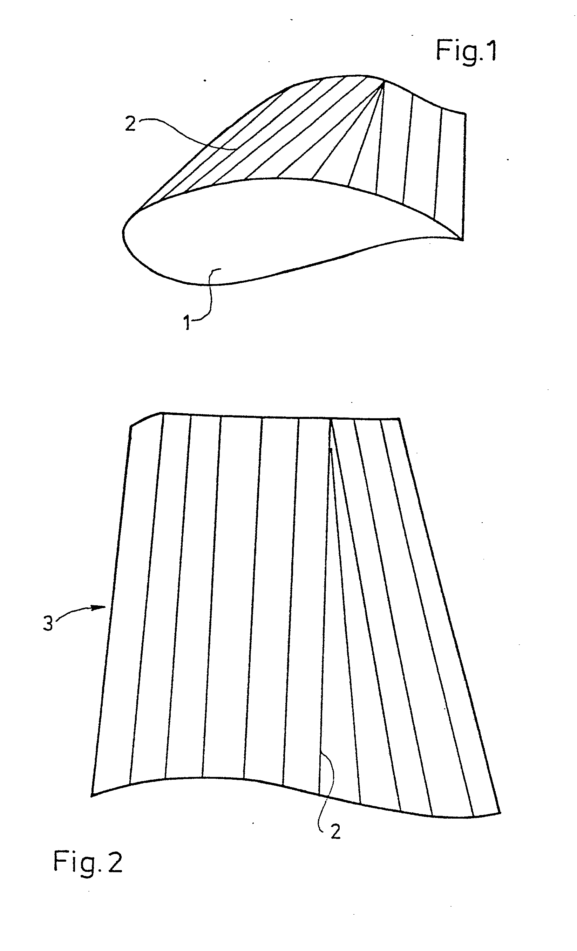

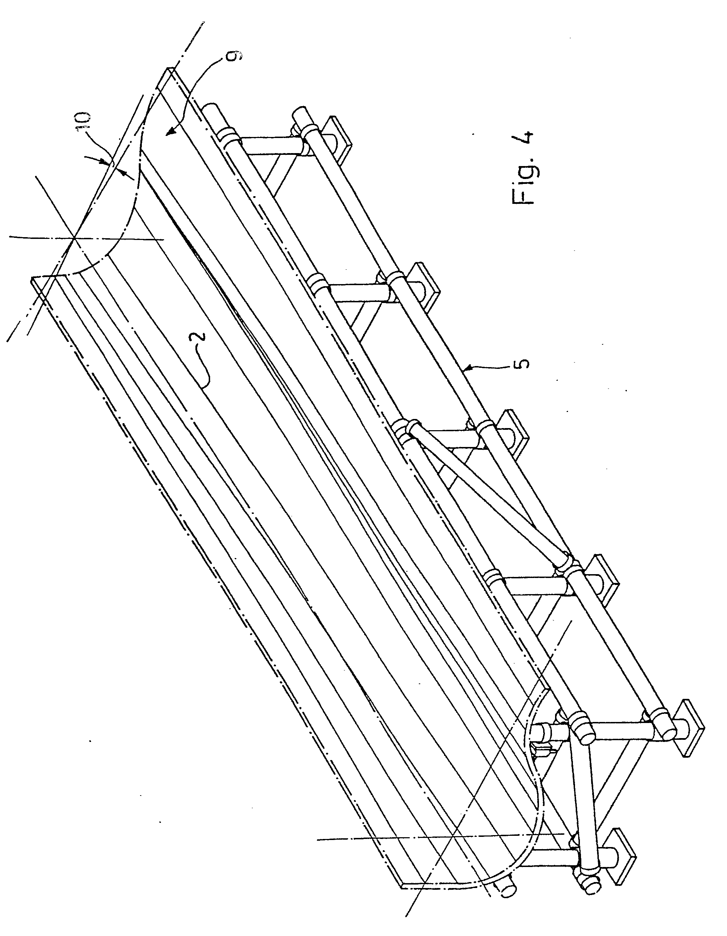

Die Oberseite des in Fig. 1 gezeigten Abschnittes 1 eines Flügels wird in Längserstreckung durch in der erforderlichen Krümmungsanpassung entsprechenden Abständen angeordnete gerade Linien 2, die Profilpunkte gleicher Tangentensteigung verbinden, in einzelne Abschnitte aufgeteilt, die durch ebene Flächen angenähert werden (Strak-Verfahren). Die auf diese Weise erreichte Abwicklung 3 der oberen Flügelhälfte ist in Fig. 2 gezeigt. Entsprechend dieser Abwicklung wird nun ein Blech zugeschnitten und längs der vorher angerissenen geraden Biegelinien 2 unter den abhängig von der Profilwölbung ermittelten Winkeln gebogen. Dadurch erhält man eine abgebogene Formwand 9, wie sie in Fig. 4 gezeigt ist, wobei die Biegelinien 2 von Fig. 2 und 4 einander vollständig entsprechen.

Die die Formschale bildende Formwand 9 ist auf einer Abstützung 5 in Form eines aus Stangen und Ständern zusammengesetzten Gestells gelagert und fixiert. Diese Lagerung und Fixierung erfolgt durch am Gestell über der Höhe festlegbare Befestigungen 12 und 13, wobei die Befestigungen 12 auf der einen Längsseite der Abstützung 5 auf einer in Richtung der Pfeile verlaufenden Achse 7 und die Befestigungen 13 auf der anderen Längsseite der Abstützung 5 in Richtung der durch die Pfeile veranschaulichten Achse 7 angeordnet sind.

Die Formwand 9 wird an der auf der Achse 7 der Befestigungen 12 sitzenden Befestigung 11 fixiert, so dass eine Relativbewegung zwischen der Formwand 9 und der Abstützung 5 an dieser Stelle nicht möglich ist. Die Befestigungen 12 sind so ausgebildet, das eine Relativbewegung zwischen der Abstützung 5 und der Formwand 9 in Richtung der Achse 7 möglich ist. Die Befestigungen 13 sind an der Abstützung 5 so angebracht, dass eine Relativbewegung zwischen der Formwand 9 und den Befestigungen 13 in Richtung der Achse 7' und senkrecht dazu in Richtung der Achse 8, also quer zu den Achsen 7, 7', möglich ist. Durch diese Art der Befestigung ist die Formwand 9 an der Abstützung 5 über die Befestigung 11 fixiert, jedoch thermisch entkoppelt, so dass bei Verwendung von heiss härtenden Systemen in der Formschale die freie thermische Ausdehnung der Formwand 9 und damit die Beibehaltung der Profilform gewährleistet ist.

Wie aus Fig. 4 zu ersehen ist, kann der Formwand 9 in Längsrichtung eine elastische Verwindung aufgeprägt werden, die durch den Winkel 10 dargestellt ist. Diese Verwindung wird durch die Befestigungen 11, 12 und 13 fixiert.

## Patentansprüche

1. Formschale, insbesondere Laminier-Formschale für räumlich gekrümmte Faserverbund-Bauteile, mit einer einstückigen, plattenförmigen Formwand (9), die der Negativkontur des herzustellenden Bauteils (1) angepasst und auf einer Abstützung (5) fixiert ist, dadurch gekennzeichnet, dass von dem herzustellenden, idealen nichtabwickelbaren Bauteil (1) an mindestens zwei, im Abstand voneinander angeordneten, nicht-ähnlichen Querschnittskonturen Profilpunkte gleicher Tangentensteigung durch gerade Verbindungslinien (2) miteinander verbunden werden und die Formwand (9) längs dieser Verbindungslinien (2) unter durch die Querschnittskontur vorgegebenen Winkeln abgebogen ist, so dass die ideale Querschnittskontur durch ein Polygon angenähert ist.

2. Formschale nach Anspruch 1, dadurch gekennzeichnet, dass die Formwand (9) ein Blechteil ist.

3. Formschale nach Anspruch 1 oder 2, dadurch gekennzeichnet, dass an der Abstützung (5) Befestigungen (11, 12, 13) vorgesehen sind, die im wesentlichen punktförmig längs zweier, zueinander paralleler Achsen (7, 7') angeordnet sind, wobei auf der einen Achse (7) nur eine einzige Befestigung (11) die Formwand (9) lagefest fixiert und die anderen Befestigungen (12) in Richtung dieser Achse auslenkbar sind, während die Befestigungen (13) der anderen Achse (7') in deren Richtung und quer (8) dazu auslenkbar sind.

4. Formschale nach Anspruch 3, dadurch gekennzeichnet, dass die Befestigungen (11,12 13) an der Abstützung (5) an eine elastische Verwindung der Formwand (9) anpassbar sind.

5. Formschale nach einem der vorhergehenden Ansprüche, gekennzeichnet durch Anordnung mehrerer, in Bauteillängsrichtung aneinandergrenzender, jeweils durch eine abgebogene Formwand (9) gebildeter Formschalen.

## Claims

1. A mould dish, more especially a laminating mould dish for spatially curved fibre composite structural parts, comprising a one-piece plate-shaped mould wall (9) which is adapted to the negative contour of the structural part (1) to be produced and is fixed on a support (5), characterised in that of the ideal nondevelopable structural part (1) that is to be produced on at least two non-similar cross-sectional contours which are arranged at a spacing from one another, profile points of the same tangent pitch are connected to one another by straight connecting lines (2) and the mould wall (9) is bent aside along these connecting lines (2) at angles which are preset by the cross-sectional contour, so that the ideal cross-sectional contour is approximated by a polygon.

2. A mould dish according to claim 1, characterised in that the mould wall (9) is sheet-metal.

3. A mould dish according to claim 1 or 2, characterised in that provided on the support (5) are fastenings (11, 12, 13) which are arranged in a substantially punctiform manner along two axes (7, 7') which are parallel to one another, in which respect on the one axis (7) only a single fastening (11) fixes the mould wall (9) in a positionally-fast manner and the other fastenings (12) are deflectable in the direction of this axis, whilst the fastenings (13) of the other axis (7') are deflectable in the direction thereof and transversely (8) thereto.

4. A mould dish according to claim 3, characterised in that the fastenings (11, 12, 13) on the support (5) are adaptable to an elastic warping of the mould wall (9).

5. A mould dish according to one of the preceding claims, characterised by the arrangement of several mould dishes which are contiguous in the longitudinal direction of the structural part and which are formed in each case by a bent-aside mould wall (9).

## Revendications

1. Coquille de moulage, notamment en stratifié, pour des pièces en matériau composite fibreux courbées dans l'espace, dotée d'une paroi de moule (8) en forme de plaque d'un seul tenant adaptée au contour négatif de la pièce à réaliser (1) et fixée sur un support (5), coquille de moulage caractérisée par le fait que, sur au moins deux contours de section non semblables, placés à une certaine distance l'un de l'autre, de la pièce idéale non développable (1), des points de profil de même pente tangentielle sont reliés entre eux par des lignes droites de jonction (2) et la paroi de moule (9) est recoudée le long de ces lignes de jonction (2) sous des angles prédéterminés par le contour de section, si bien que le contour de section idéal est approché par un polygone.

2. Coquille de moulage selon la revendication 1 caractérisée par le fait que la paroi de moule (9) est une pièce de tôle.

3. Coquille de moulage selon l'une quelconque des revendications 1 ou 2 caractérisée par le fait que le support (5) comporte des fixations (11, 12, 13) qui sont disposées essentiellement sous forme ponctuelle le long de deux axes (7, 7') parallèles entre eux, sur l'un desquels (7) une seule fixations (11) fixe en position la paroi de moule (9) et les autres fixations (12) sont déportables en direction dudit axe (7), tandis que les fixations (13) de l'autre axe (7') sont déportables dans la direction de ce dernier et en direction perpendiculaire (8).

4. Coquille de moulage selon la revendication 3 caractérisée par le fait que, sur le support (5), les fixations (11, 12, 13) sont adaptables à un gauchissement élastique de la paroi de moule.

5. Coquille de moulage selon l'une quelconque des revendications 1 à 4 caractérisée par la disposition de plusieurs coquilles de moulage contiguës les unes aux autres en direction longitudinale de la pièce et formées chaque fois par une paroi de moule raccordée.

Fig.1

Fig.2

Fig. 3

Fig. 4

2

10

9

5

0 029 912